# EUROPÄISCHE PATENTSCHRIFT

(11) **EP 1 305 973 B1**
(45) Veröffentlichungstag und Bekanntmachung des Hinweises auf die Patenterteilung: **10.09.2008**
(21) Anmeldenummer: 01957733.7
(22) Anmeldetag: 24.07.2001
(51) Int. Cl.: H04Q 7/38

(54) **VERFAHREN ZUR NACHBARZELLENBEOBACHTUNG IN EINEM MOBILFUNKSYSTEM SOWIE ENTSPRECHENDES MOBILFUNKSYSTEM**
METHOD FOR MONITORING ADJACENT ZONES IN A MOBILE RADIO TELEPHONE SYSTEM AND A CORRESPONDING MOBILE RADIO TELEPHONE SYSTEM
PROCEDE POUR SURVEILLER DES CELLULES VOISINES DANS UN SYSTEME RADIOTELEPHONIQUE MOBILE, ET SYSTEME RADIOTELEPHONIQUE MOBILE CORRESPONDANT

(30) Priorität: 28.07.2000 DE 10036898
(43) Veröffentlichungstag der Anmeldung: 02.05.2003
(73) Patentinhaber: SIEMENS AKTIENGESELLSCHAFT, 80333 München (DE)
(72) Erfinder: LOBINGER, Andreas, 83714 Miesbach (DE); RAAF, Bernhard, 81475 München (DE); SENNINGER, Christian, 82515 Wolfratshausen (DE)
(86) Internationale Anmeldenummer: PCT/DE2001/002790
(87) Internationale Veröffentlichungsnummer: WO 2002/011482

(56) Entgegenhaltungen:
- EP-A- 0 565 506
- WO-A-00/35230
- "TS 25.231 V0.3.0 (1999-06);Technical Specification; 3rd Generation Partnership Project (3GPP); Technical Specification Group (TSG) Radio Access Network (RAN); Working Group 1 (WG1); Physical layer - Measurements" 3RD GENERATION PARTNERSHIP PROJECT (3GPP);TECHNICAL SPECIFICATION GROUP (TSG) RADIO ACCESS NETWORK (RAN); WORKING GROUP 1 (WG1); PHYSICAL LAYER - MEASUREMENTS, XX, XX, XP002127381

## Beschreibung

Die vorliegende Erfindung betrifft Verfahren zur Nachbarzellenbeobachtung in einem Mobilfunksystem nach dem Oberbegriff der Ansprüche 1 und 6 sowie ein entsprechend ausgestaltetes Mobilfunksystem.

Herkömmliche Mobilfunksysteme sind bekanntermaßen zellular aufgebaut, d.h. das jeweilige Mobilfunksystem wird durch eine Vielzahl von Funkzellen gebildet, wobei jeder Funkzelle eine Basisstation zugeordnet ist. Befindet sich eine Mobilstation, beispielsweise ein Mobiltelefon, in dem geographischen Bereich einer Funkzelle, erfolgt eine Kommunikation mit der Mobilstation innerhalb des Mobilfunksystems zwischen der Mobilstation und der der augenblicklichen Zelle zugeordneten Basisstation. Bewegt sich die Mobilstation von einer Zelle in eine andere Zelle, muss die zwischen der Mobilstation und der der "alten" Zelle zugeordneten Basisstation bestehende Kommunikationsverbindung an die der "neuen" Zelle zugeordneten Basisstation weitergereicht werden. Dieser Vorgang wird als "Handover" bezeichnet.

Damit ein derartiger "Handover"-Vorgang möglichst rasch und störungsfrei durchgeführt werden kann, ist erforderlich, dass von der in dem geographischen Bereich einer Zelle befindlichen Mobilstation kontinuierlich die von den Basisstationen benachbarter Zellen gesendeten Signale überwacht und ausgewertet werden, um auf diese Weise Systeminformationen der benachbarten Zellen zu gewinnen, die beim Betreten einer benachbarten neuen Zelle genutzt werden können, um möglichst schnell eine Kommunikation zwischen der Basisstation der neuen Zelle und der Mobilstation aufzubauen.

Diese Nachbarzellenbeobachtung der Mobilstation wird dadurch erschwert, dass von den Basisstationen in den einzelnen Zellen unterschiedliche Verwürfelungscodes ("Scrambling Codes") verwendet werden. Dies bedeutet für die in einer Zelle befindliche Mobilstation, dass sie zur Decodierung und Auswertung der Sendesignale von Basisstationen benachbarter Zellen laufend entsprechend den unterschiedlichen Verwürfelungscodes eingestellt werden muss. Je mehr benachbarte Zellen vorhanden sind, desto länger dauert die Nachbarzellenbeobachtung.

An Landesgrenzen, die in der Regel auch Trennlinien zweier verschiedener Mobilfunk-Netzbetreiber darstellen, kann der Fall auftreten, dass die beiden Netzbetreiber verschiedener Nationalitäten das selbe Frequenzband benutzen. Befindet sich eine Mobilstation des einen Netzbetreibers nahe genug an der Grenze zu dem anderen Netzbetreiber, so kann von der Mobilstation aus das Sendesignal der Zelle des anderen Netzbetreibers jenseits der Grenze empfangen werden. Die eindeutige Zuordnung des von der Mobilstation empfangenen Signals zu einer Zelle bzw. zu einem Netzbetreiber erfolgt beispielsweise in UMTS-Mobilfunksystemen ("Universal Mobile Telecommunication System") durch das Lesen einer Systeminformation, welche über den sogenannten "Broadcast Control Channel" (BCCH) der Basisstation der jeweiligen Zelle gesendet wird.

Das Lesen der Systeminformation einer Nachbarzelle ist ein zeitaufwendiger Vorgang, so dass beispielsweise an einer Ländergrenze der Fall auftreten kann, dass zu einer Zelle, in der sich die Mobilstation augenblicklich befindet, nur eine benachbarte Zelle des selben Betreibers existiert, während mehrere benachbarte Zellen des anderen Netzbetreibers vorhanden sind, so dass die Systeminformationen der angrenzenden Zellen des anderen Netzbetreibers bei der Nachbarzellenbeobachtung gelesen und ausgewertet werden müssen. D.h., die Mobilstation benötigt sehr viel Zeit, um das von einem Netzbetreiber empfangene Signal zu identifizieren. Diese Zeit kann kumulativ relativ groß werden, wenn sehr viele Nachbarzellen eines auf der gleichen Frequenz wie der eigene Netzbetreiber sendenden fremden Netzbetreibers vorhanden sind, d.h. wenn für die Mobilstation sehr viele Nachbarzellen eines fremden Netzbetreibers auf der gleichen Frequenz sichtbar sind.

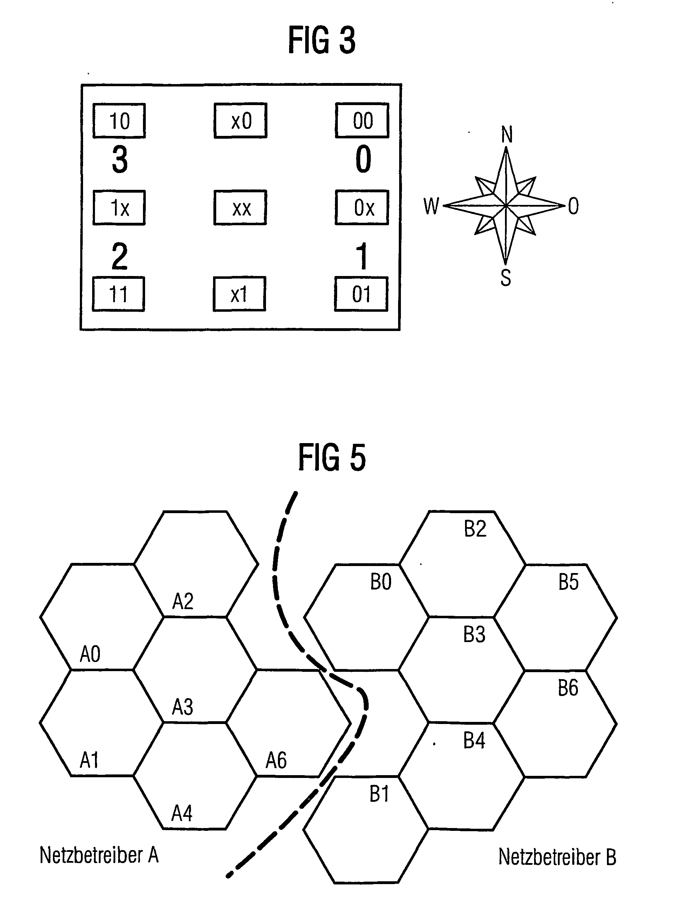

Zur Veranschaulichung ist in Figur 5 eine gestrichelte Ländergrenze dargestellt, welche ein zellulares Mobilfunknetz eines Netzbetreibers A und ein zellulares Mobilfunknetz eines Netzbetreibers B trennt. Gemäß Figur 5 umfasst das Mobilfunknetz A einzelne Zellen A0-A6, während das Mobilfunknetz B einzelne Zellen B0-B6 umfasst. Befindet sich beispielsweise eine Mobilstation des Netzbetreibers A in der Zelle A6, sind von der Mobilstation sowohl die benachbarten Zellen A3 und A4 des eigenen Mobilfunknetzes A als auch die benachbarten Zellen B0, B3, B4 und B1 des fremden Mobilfunknetzes B beobachtbar, d.h. die Mobilstation liest sowohl die Systeminformationen der Zellen A3 und A4 als auch die Systeminformationen der Zellen B0, B3, B4 und B1, obwohl dies eigentlich nur für die Zellen A3 und A4 erforderlich wäre, da es sich bei den Zellen B0, B3, B4 und B1 um Zellen eines fremden Mobilfunknetzes handelt.

Ein Verfahren gemäß dem Oberbegriff der Patentansprüche 1 und 6 ist aus der internationalen Patentanmeldung WO 00/35230 A bekannt.

Der vorliegenden Erfindung liegt die Aufgabe zugrunde, ein Verfahren zur Nachbarzellenbeobachtung in einem Mobilfunksystem sowie ein entsprechend ausgestaltetes Mobilfunksystem bereitzustellen, womit die zur Nachbarzellenbeobachtung benötigte Zeit reduziert werden kann.

Diese Aufgabe wird erfindungsgemäß durch ein Verfahren mit den Merkmalen des Anspruchs 1 bzw. des Anspruchs 6 sowie ein Mobilfunksystem mit den Merkmalen des Anspruches 13 gelöst. Die Unteransprüche definieren jeweils bevorzugte und vorteilhafte Ausführungsformen der vorliegenden Erfindung.

Sowohl gemäß dem erfindungsgemäßen Verfahren nach Anspruch 1 als auch gemäß dem erfindungsgemäßen Verfahren nach Anspruch 6 wird an die in einer Zelle befindliche Mobilstation von der Basisstation der entsprechenden Zelle eine Signalisierungsinformation übertragen, welche der Mobilstation mitteilt, welche Verwürfelungscodes ("Scrambling Codes") bei der Nachbarzellenbeobachtung zu benutzen bzw. nicht zu benutzen sind. Auf diese Weise können die bei der Nachbarzellenbeobachtung zu überwachenden Sendesignale der benachbarten Zellen bzw. die entsprechenden Verwürfelungscodes eingegrenzt und somit die Nachbarzellenbeobachtung beschleunigt werden, indem der Mobilstation lediglich die von den Nachbarzellen des eigenen Netzbetreibers benutzten Verwürfelungscodes mitgeteilt bzw. die von den benachbarten Zellen eines fremden Netzbetreibers verwendeten Verwürfelungscodes von der Nachbarzellenbeobachtung ausgeschlossen werden. Dabei wird davon ausgegangen, dass die einzelnen Nachbarzellen jeweils unterschiedliche Verwürfelungscodes verwenden, was bei benachbarten Netzbetreibern, welche die selbe Frequenz nutzen, auch nach dem derzeitigen Stand der Technik durch eine gemeinsame Vorausplanung der in den einzelnen Zellen verwendeten Verwürfelungscodes notwendig ist.

Gemäß dem erfindungsgemäßen Verfahren nach Patentanspruch 1, welches den Netzbetreibern relativ viel Freiheit bei der Vergabe der Verwürfelungscodes lässt und mit relativ wenigen Bits codiert werden kann, ist vorgesehen, die einzelnen dezimalen Verwürfelungscodes der benachbarten Zellen binär abzubilden und mit Hilfe einer entsprechenden Maske bestimmte Bits der binären Verwürfelungscodes zu selektieren. Entsprechen die durch die Maske selektierten Bits der einzelnen Verwürfelungscodes einem entsprechenden Muster, bedeutet dies für die Mobilstation, dass die entsprechenden Verwürfelungscodes bei der Nachbarzellenbeobachtung benutzt bzw. nicht benutzt werden sollen. Bei dieser Art der Signalisierung müssen der Mobilstation in Form der Systeminformation lediglich die Maske sowie das gewünschte Muster mitgeteilt werden.

Gemäß dem erfindungsgemäßen Verfahren nach Patentanspruch 6 wird vorgeschlagen, in den einzelnen Mobilfunknetzen bzw. Ländern Verwürfelungscodes zu verwenden, die jeweils entsprechend derselben Himmelsrichtungen ausgerichtet sind. Dies betrifft insbesondere die in den grenznahen Zellen verwendeten Verwürfelungscodes. Im Landesinneren können hingegen beliebige Verwürfelungscodes verwendet werden. Die an den Himmelsrichtungen orientierte Ausrichtung der Verwürfelungscodes kann beispielsweise derart erfolgen, dass jeweils an den der selben Himmelsrichtung entsprechenden Ecken der einzelnen Mobilfunknetze bestimmte Bits der für die Nachbarzellenbeobachtung zu benutzenden bzw. nicht zu benutzenden Verwürfelungscodes festgelegt sind. So können beispielsweise an den Ecken der einzelnen Mobilfunknetze jeweils die beiden letzten Bits der für die Nachbarzellenbeobachtung zu benutzenden bzw. nicht zu benutzenden Verwürfelungscodes festgelegt sein, während in den grenznahen Zellen zwischen zwei Ecken eines Mobilfunknetzes, d.h. in einer Übergangszone zwischen zwei Ecken, lediglich eines dieser beiden letzten Bits der Verwürfelungscodes festgelegt ist. Auf diese Weise muss zur Signalisierung der bei der Nachbarzellenbeobachtung zu benutzenden bzw. nicht zu benutzenden Verwürfelungscodes lediglich die augenblickliche geographische Lage der Mobilstation innerhalb des jeweiligen Mobilfunknetzes übertragen werden, was lediglich drei Bits erfordert. Abhängig von dieser Information über die eigene augenblickliche geographische Lage kann die Mobilstation unmittelbar auf die für die Nachbarzellenbeobachtung jeweils zu benutzenden Verwürfelungscodes schließen.

Mit Hilfe dieses Verfahrens kann so mit einem besonders geringen Signalisierungsaufwand die zur Nachbarzellenbeobachtung erforderliche Zeit reduziert werden, wobei zudem zuverlässig Kollisionen vermieden werden können, da durch die in den einzelnen benachbarten Mobilfunknetzen bzw. Ländern vorgesehene identische Ausrichtung der Verwürfelungscodes entsprechend den Himmelsrichtungen nicht die selben Verwürfelungscodes in benachbarten Zellen unterschiedlicher Netze verwendet werden können.

Die vorliegende Erfindung ist nicht auf den bevorzugten Anwendungsbereich der Verwürfelungscodes beschränkt, sondern kann allgemein auf alle möglichen Arten von zellenspezifischen Codes angewendet werden, mit denen von den Basisstationen der einzelnen Zellen ein insbesondere die Systeminformation der entsprechenden Zelle beinhaltendes Sendesignal erzeugt wird, wobei die vorliegende Erfindung insbesondere auf UMTS-Mobilfunknetze anwendbar ist.

Die Signalisierungsinformation, welche der Mobilstation die bei der Nachbarzellenbeobachtung zu benutzenden bzw. nicht zu benutzenden Codes mitteilt, wird vorzugsweise in der Systeminformation der augenblicklichen Zelle vorgesehen. Dabei würde es im Prinzip genügen, wenn diese Signalisierung jeweils in den grenznahen Zellen eines Mobilfunknetzes, d.h. an den unmittelbar an ein anderes Mobilfunknetz angrenzenden Zellen, gesendet wird.

Um mit der zuvor erwähnten Signalisierungsinformation nicht sämtliche für die Nachbarzellenbeobachtung zu benutzenden bzw. nicht zu benutzenden Codes mitteilen zu müssen, kann diese Information auch in entsprechend codierter Form übertragen werden, um den Signalisierungsaufwand zu reduzieren.

So können beispielsweise mit der Signalisierungsinformation lediglich die Grenzen des Bereichs mitgeteilt werden, in dem die für die Nachbarzellenbeobachtung zu benutzenden bzw. nicht zu benutzenden Verwürfelungscodes liegen. Allgemein können alle in den benachbarten Zellen verwendeten Verwürfelungscodes in Teilmengen zusammengefasst und lediglich eine die gewünschte Teilmenge bezeichnende Information übertragen werden, so dass bei diesem Ausführungsbeispiel im Prinzip lediglich eine Zahl zur Bezeichnung des gewünschten Teilraums bzw. der gewünschten Teilmenge übertragen werden muss.

Die vorliegende Erfindung wird nachfolgend näher unter Bezugnahme auf die beigefügte Zeichnung anhand bevorzugter Ausführungsbeispiele erläutert.
Figur 1 zeigt eine Darstellung zur Erläuterung des der vorliegenden Erfindung zugrundeliegenden Prinzips anhand eines Ausführungsbeispiels,
Figur 2 zeigt eine Darstellung zur Erläuterung eines weiteren Ausführungsbeispiels der vorliegenden Erfindung,
Figur 3 und 4 zeigen Darstellungen zur Erläuterung eines weiteren Ausführungsbeispiels der vorliegenden Erfindung, und
Figur 5 zeigt eine Darstellung zur Erläuterung des der vorliegenden Erfindung zugrundeliegenden Problems.

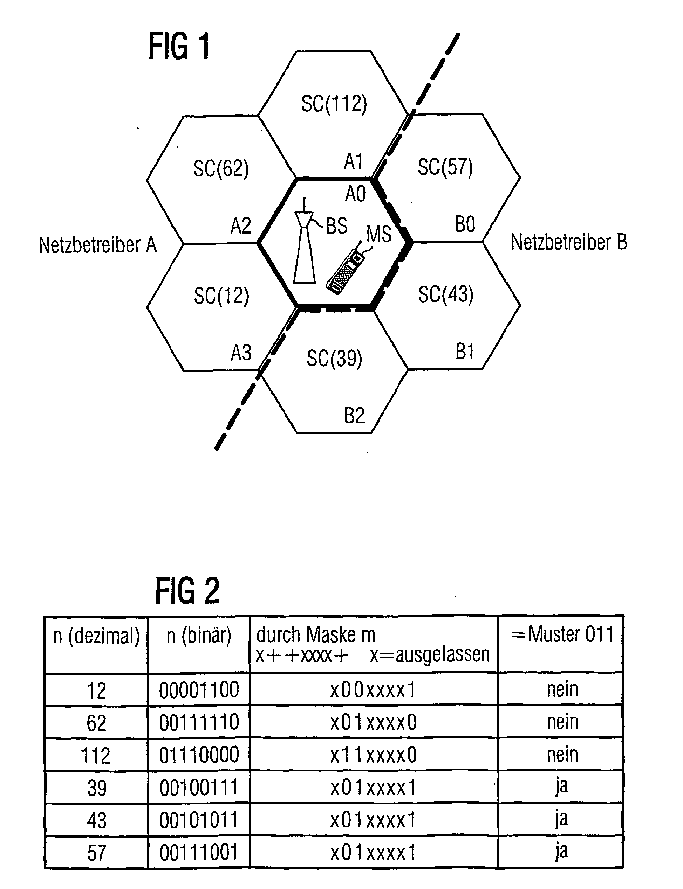

In Figur 1 sind zwei beispielsweise durch eine Ländergrenze getrennte Mobilfunknetze eines Netzbetreibers A und eines Netzbetreibers B dargestellt, wobei das Mobilfunknetz A Funkzellen A0-A3 und das Mobilfunknetz B Funkzellen BO-B2 umfasst. Jeder Zelle ist eine Basisstation zugeordnet, welche für die Kommunikation mit einer Mobilstation in dem geographischen Bereich der entsprechenden Zelle zuständig ist. In Figur 1 ist lediglich für die Zelle A0 die entsprechende Basisstation BS dargestellt. Es wird davon ausgegangen, dass sich eine Mobilstation MS augenblicklich in der Zelle A0 befindet.

In jeder Zelle wird von der entsprechenden Basisstation ein anderer Verwürfelungscode ("Scrambling Code") verwendet, wobei von einer gemeinsamen Planung der Verwendung der Verwürfelungscodes der beiden angrenzenden Netzbetreiber A und B ausgegangen wird. In Figur 1 sind die von den entsprechenden Zellen verwendeten Verwürfelungscodes in der Form SC(n) dargestellt, wobei SC(n) den Verwürfelungscode mit der Ordnungszahl n bezeichnet.

Jede Basisstation der einzelnen Zellen, insbesondere die Basisstationen der grenznahen Zellen A0, A1 und A3 bzw. BO-B2, führen eine Liste bzw. Aufstellung über die in den benachbarten Zellen des selben Netzbetreibers verwendeten Verwürfelungscodes sowie die in den Nachbarzellen des angrenzenden Netzbetreibers verwendeten Verwürfelungscodes. Bei dem in Figur 1 dargestellten Beispiel bedeutet dies für die Zelle A0 bzw. die entsprechende Basisstation BS, dass in dieser Liste die Verwürfelungscodes n = (12, 62, 112) als Verwürfelungscodes des eigenen Netzbetreibers und die Verwürfelungscodes n = (39, 43, 57) als Verwürfelungscodes eines fremden Netzbetreibers gekennzeichnet sind. Durch Übertragung dieser Liste in Form einer entsprechenden Signalisierungsinformation an die im geographischen Bereich der Zelle A0 befindliche Mobilstation MS kann der Mobilstation MS mitgeteilt werden, dass lediglich die Verwürfelungscodes mit n = (12, 62, 112) für die Nachbarzellenbeobachtung verwendet bzw. die Verwürfelungscodes mit n = (39, 43, 57) nicht für die Nachbarzellenbeobachtung verwendet werden sollen.

Abhängig von der Netztopologie kann jedoch diese Liste mit den eigenen bzw. fremden Verwürfelungscodes relativ lang werden, so dass entsprechend auch der Signalisierungsaufwand relativ umfangreich werden kann. Es werden daher nachfolgend Ausführungsbeispiele dargestellt, bei denen eine Signalisierung der für die Nachbarzellenbeobachtung zu benutzenden bzw. nicht zu benutzenden Verwürfelungscodes mit reduziertem Aufwand möglich ist.

So kann beispielsweise mit Hilfe der von der Basisstation BS der Zelle A0 an die Mobilstation MS übertragenen Signalisierungsinformation lediglich ein Bereich mitgeteilt werden, in dem die für die Nachbarzellenbeobachtung zu verwendenden bzw. nicht zu verwendenden Verwürfelungscodes liegen. Es müssen somit nur noch zwei Zahlen, nämlich der Anfang und das Ende des entsprechenden Bereichs, an die Mobilstation MS übertragen werden. Für das in Figur 1 dargestellte Beispiel bedeutet dies, dass die Basisstation BS lediglich die Bereichsgrenzen "39" und "57" an die Mobilstation MS übertragen muss, um die für die Nachbarzellenbeobachtung zu verwendenden Verwürfelungscodes mitzuteilen.

Eine weitere Möglichkeit für eine Signalisierung mit geringem Aufwand ist die Unterteilung der in den benachbarten Zellen verwendeten Verwürfelungscodes in mehrere Teilräume bzw. Teilmengen, so dass der Mobilstation MS lediglich eine Zahl zur Bezeichnung der Teilmenge mit den für die Nachbarzellenbeobachtung gewünschten Verwürfelungscodes übertragen werden muss. Bei dem in Figur 1 gezeigten Beispiel können z.B. die Verwürfelungscodes der zu der Zelle A0 benachbarten Zellen A1-A3 des selben Mobilfunknetzes A und die Verwürfelungscodes der zu der Zelle A0 benachbarten Zellen B0-B2 des fremden Mobilfunknetzes derart in Teilmengen zusammengefasst werden, dass die Verwürfelungscodes der benachbarten Zellen des eigenen Mobilfunknetzes A allesamt die Eigenschaft n = gerade aufweisen, während die Verwürfelungscodes der benachbarten Zellen des fremden Mobilfunknetzes B die Eigenschaft n = ungerade besitzen.

An Punkten, an denen mehr als zwei unterschiedliche Mobilfunknetze aufeinander treffen, kann diese Aufteilung der Verwürfelungscodes weitergeführt werden, wobei beispielsweise die Verwürfelungscodes der benachbarten Zellen des eigenen Mobilfunknetzes A allgemein die Eigenschaft n mod p erfüllen, wobei p die Anzahl der aufeinandertreffenden Mobilfunknetze bezeichnet.

In Figur 2 ist ein weiteres Ausführungsbeispiel der vorliegenden Erfindung für eine Signalisierung der bei der Nachbarzellenbeobachtung zu verwendenden Verwürfelungscodes mit geringem Aufwand dargestellt, wobei das in Figur 2 gezeigte Beispiel den Netzbetreibern relativ viel Freiheit bei der Vergabe der Verwürfelungscodes lässt und mit relativ wenigen Bits codiert werden kann.

In Figur 2 sind die einzelnen in Figur 1 dargestellten Verwürfelungscodes bzw. die entsprechenden Ordnungszahlen der zu der Zelle A0 benachbarten Zellen sowohl dezimal als auch binär dargestellt. Es wird eine Maske m definiert, welche nur bestimmte Bits der einzelnen binären Verwürfelungscodes selektiert. Bilden die durch die Maske m selektierten Bits ein bestimmtes Muster, bei dem in Figur 2 gezeigten Ausführungsbeispiel das Muster "011", bedeutet dies für die Mobilstation MS, dass der entsprechende Verwürfelungscode nicht bei der Nachbarzellenbeobachtung verwendet werden soll.

Bei dem in Figur 2 dargestellten Ausführungsbeispiel mit einem m der Länge 8 Bit ist für die Codierung der Systeminformation nur die Angabe der Maske m mit 8 Bit sowie des zu überwachenden Musters mit 3 Bit erforderlich. Die Angabe der Maske m bzw. der entsprechenden Vorschrift, welche drei Bits aus den acht Bits der Ordnungszahl n der einzelnen Verwürfelungscodes auszuwählen sind, könnte mit lediglich sechs Bits codiert werden, da es lediglich 56 Möglichkeiten gibt, drei Bits aus acht Bits auszuwählen.

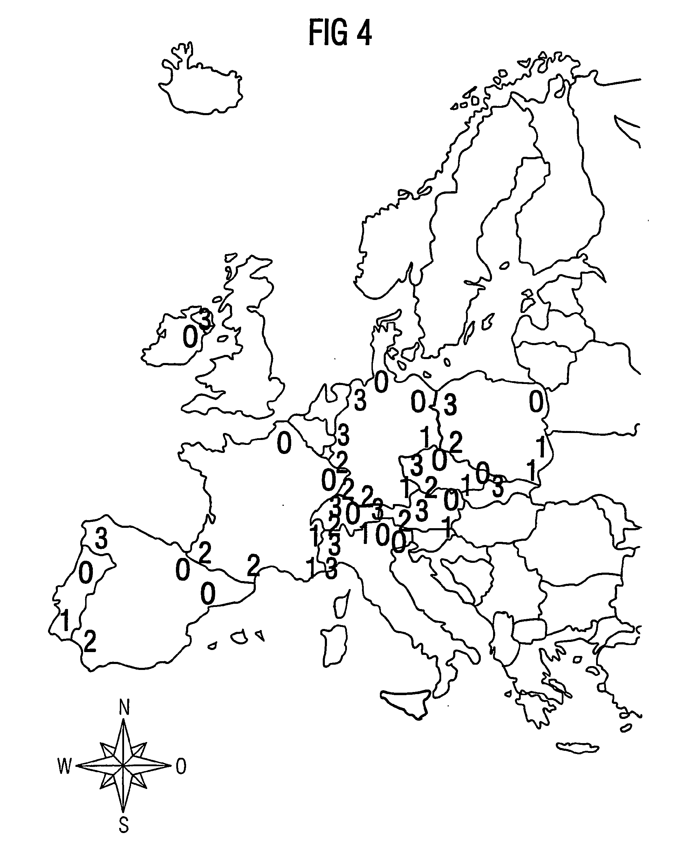

In Figur 3 und Figur 4 ist ein weiteres Ausführungsbeispiel der vorliegenden Erfindung dargestellt, welches mit einem besonders geringen Signalisierungsaufwand eine Verkürzung der für die Nachbarzellenbeobachtung erforderlichen Zeit ermöglicht.

Dabei wird davon ausgegangen, dass in allen Mobilfunknetzen bzw. Ländern, insbesondere in den aneinander angrenzenden Mobilfunknetzen bzw. Ländern, die in den einzelnen Zellen verwendeten Verwürfelungscodes gemäß dem in Figur 3 gezeigtem Schema festgelegt werden. Dabei ist in Figur 3 beispielhaft stets die Belegung der beiden letzten Bits der binär dargestellten Verwürfelungscodes bzw. eine dieser Belegung zugeordnete Zahl angedeutet, wobei die einzelnen Rechtecke jeweils Gruppen von Zellen umfassen.

Wie in Figur 3 gezeigt ist, werden innerhalb eines Landes bzw. Mobilfunknetzes verschiedene Verwürfelungscodes zugelassen, da die beiden letzten Bits dieser Verwürfelungscodes mit "xx" belegt sind. Während im Landesinneren die Zuweisung beliebig ist, sind an den vier Ecken des Landes bzw. Mobilfunknetzes die beiden letzten Bits der in den entsprechenden Zellen verwendeten Verwürfelungscodes festgelegt. So werden beispielsweise in sämtlichen der Nord-Ost-Ecke entsprechenden Zellen lediglich Verwürfelungscodes verwendet, deren beiden letzten Bits mit "00" belegt sind, etc. Für die Rand- bzw. Grenzbereiche ist hingegen lediglich eines dieser Bits festgelegt, so dass beispielsweise für die zwischen der Nord-Ost-Ecke und der Süd-Ost-Ecke liegenden grenznahen Zellen lediglich Verwürfelungscodes verwendet werden, deren vorletztes Bit mit "0" belegt ist.

Sollte das jeweils betrachtete Mobilfunknetz bzw. Land keine gemäß Figur 3 rechteckige Form haben, muss das Prinzip entsprechend generalisiert werden.

Selbstverständlich ist auch eine andere Zuordnung der Richtungen zu möglichen Verwürfelungscodes möglich, z.B. kann das Schema nach Figur 3 gedreht und/oder gespiegelt werden oder es kann auf eine größere Anzahl von Richtungen (z.B. 8 Richtungen, festgelegt durch 3 Bits des Verwürfelungscodes) verallgemeinert werden.

Um der beispielsweise in einer grenznahen Zelle befindlichen Mobilstation die für die Nachbarzellenbeobachtung zu benutzenden Verwürfelungscodes mitzuteilen, ist es lediglich erforderlich, der Mobilstation eine die augenblickliche geographische Position der Mobilstation innerhalb des entsprechenden Mobilfunknetzes bezeichnende Kennung mitzuteilen. Da gemäß dem in Figur 3 gezeigten Schema zwischen acht unterschiedlichen Himmelsrichtungen unterschieden wird, genügt hierfür eine 3-Bit-Signalisierung. Wird auf diese Weise der Mobilstation beispielsweise mitgeteilt, dass sie sich in der Nord-Ost-Ecke des entsprechenden Mobilfunknetzes befindet, kann die Mobilstation daraus ableiten, dass sie zur Nachbarzellenbeobachtung nur Verwürfelungscodes verwenden soll, deren beiden letzten Bits mit "00" belegt sind. Alle anderen Verwürfelungscodes werden von der Mobilstation nicht für die Nachbarzellenbeobachtung verwendet.

In Figur 5 ist für das Beispiel europäischer Mobilfunknetze bzw. europäischer Mobilfunknetzbetreiber dargestellt, wie das in Figur 4 gezeigte Schema auf die einzelnen Länder bzw. Mobilfunknetze abzubilden ist. Die Nord-Ost-Ecke ist jeweils mit "0", die Süd-Ost-Ecke jeweils mit "1", die Nord-West-Ecke jeweils mit "3" und die Süd-West-Ecke jeweils mit "2" bezeichnet (vgl. auch Figur 3).

Wie auch aus Figur 4 ersichtlich ist, können keine Kollisionen auftreten, d.h. in benachbarten Zellen unterschiedlicher Länder bzw. Mobilfunknetzbetreiber können nicht die selben Verwürfelungscodes verwendet werden, da in allen Ländern bzw. Mobilfunknetzen das selbe Schema (vgl. Figur 3) für die Zuordnung bzw. Festlegung der Verwürfelungscodes verwendet wird, und eine Ländergrenze bzw. Ecke, an der mehrere Länder zusammenstoßen, nicht von allen Ländern aus gesehen in der gleichen Himmelsrichtung liegen kann. Ein Punkt kann beispielsweise nicht gleichzeitig als Süd-Ost-Ecke von zwei (oder mehr) benachbarten Ländern interpretiert werden oder eine Grenze nicht gleichzeitig die Südgrenze zweier Länder sein.

## Patentansprüche

1. Verfahren zur Nachbarzellenbeobachtung in einem Mobilfunksystem, bei dem
- zumindest von der für eine Mobilstation (MS) augenblicklich zuständigen Basisstation (BS) eine Signalisierungsinformation gesendet wird, welche der Mobilstation (MS) die bei der Nachbarzellenbeobachtung zu benutzenden Codes mitteilt,
- von der in einer Zelle eines Mobilfunksystems befindlichen Mobilstation (MS) zur Nachbarzellenbeobachtung mit unterschiedlichen zellenspezifischen Codes codierte Sendesignale von Basisstationen (BS) benachbarter Zellen empfangen und entsprechend den jeweiligen zellenspezifischen Codes decodiert und ausgewertet werden, wobei die Mobilstation (MS) bei der Nachbarzellenbeobachtung nur die mit einem gemäß der Signalisierungsinformation für die Nachbarzellenbeobachtung benutzbaren Code codierten Sendesignale der benachbarten Zellen decodiert und auswertet,
**dadurch gekennzeichnet, dass**
- der Mobilstation in der Signalisierungsinformation die bei der Nachbarzellenbeobachtung zu benutzenden und/oder die bei der Nachbarzellenbeobachtung nicht zu benutzenden Codes mitgeteilt werden,
- mit der Signalisierungsinformation der Mobilstation (MS) eine bestimmte Maske sowie ein bestimmtes Bit-Muster mitgeteilt wird, wobei mit Hilfe der Maske bestimmte Bits aus der binären Darstellung der einzelnen Codes der benachbarten Zellen ausgewählt werden, und
- die Mobilstation für die Nachbarzellenbeobachtung nur Codes verwendet, deren durch die Maske ausgewählten Bits entweder dem bestimmten Bit-Muster entsprechen oder dem bestimmten Bit-Muster nicht entsprechen.

2. Verfahren nach Anspruch 1,
**dadurch gekennzeichnet,**
**dass** es sich bei den Codes um Verwürfelungscodes handelt.

3. Verfahren nach Anspruch 1 oder 2,
**dadurch gekennzeichnet,**
**dass** zumindest die Basisstationen (BS) der an einer Grenze von einem Mobilfunknetzbetreiber (A) zu einem anderen Mobilfunknetzbetreiber (B) angeordneten Zellen die Signalisierungsinformation senden, wobei die gemäß der Signalisierungsinformation für die Nachbarzellenbeobachtung zu benutzenden Codes benachbarten Zellen des selben Netzbetreibers (A) bzw. die gemäß der Signalisierungsinformation für die Nachbarzellenbeobachtung nicht zu benutzenden Codes benachbarten Zellen des anderen Netzbetreibers (B) entsprechen.

4. Verfahren nach einem der Ansprüche 1-3,
**dadurch gekennzeichnet,**
**dass** die Signalisierungsinformation in Form einer Systeminformation übertragen wird.

5. Verfahren nach einem der vorhergehenden Ansprüche,
**dadurch gekennzeichnet,**
**dass** jede die Signalisierungsinformation sendende Basisstation (BS) eine Liste über die bei der Nachbarzellenbeobachtung zu benutzenden und/oder eine Liste über die bei der Nachbarzellenbeobachtung nicht zu benutzenden Codes führt.

6. Verfahren zur Nachbarzellenbeobachtung in einem Mobilfunksystem, bei dem
- zumindest von der für eine Mobilstation (MS) augenblicklich zuständigen Basisstation (BS) eine Signalisierungsinformation gesendet wird, welche der Mobilstation (MS) die bei der Nachbarzellenbeobachtung zu benutzenden Codes mitteilt,
- von der in einer Zelle eines Mobilfunksystems befindlichen Mobilstation (MS) zur Nachbarzellenbeobachtung mit unterschiedlichen zellenspezifischen Codes codierte Sendesignale von Basisstationen (BS) benachbarter Zellen empfangen und entsprechend den jeweiligen zellenspezifischen Codes decodiert und ausgewertet werden, wobei die Mobilstation (MS) bei der Nachbarzellenbeobachtung nur die mit einem gemäß der Signalisierungsinformation für die Nachbarzellenbeobachtung benutzbaren Code codierten Sendesignale der benachbarten Zellen decodiert und auswertet,
**dadurch gekennzeichnet, dass**
- der Mobilstation in der Signalisierungsinformation die bei der Nachbarzellenbeobachtung zu benutzenden und/oder die bei der Nachbarzellenbeobachtung nicht zu benutzenden Codes mitgeteilt werden,
- in den einzelnen Zellen des Mobilfunksystems (A, B) die von der jeweiligen Basisstation (BS) verwendeten Codes entsprechend der geographischen Lage der jeweiligen Zelle in dem Mobilfunksystem (A, B) definiert werden, und
- der Mobilstation (MS) mit der Signalisierungsinformation die augenblickliche geographische Lage der Mobilstation (MS) innerhalb des Mobilfunksystems (A, B) mitgeteilt wird, wobei die Mobilstation (MS) aus dieser Information über die eigene geographische Lage innerhalb des Mobilfunksystems (A, B) auf die in den benachbarten Zellen verwendeten Codes schließt und diese Codes für die Nachbarzellenbeobachtung benutzt.

7. Verfahren nach Anspruch 6,
**dadurch gekennzeichnet,**
**dass** für in dem selben geographischen Bereich des Mobilfunksystems (A, B) angeordnete Zellen mindestens ein Bit des in den entsprechenden Zellen verwendeten Codes identisch festgelegt ist, wobei insbesondere für in Eckbereichen des Mobilfunksystems (A, B) befindliche Zellen zwei Bits identisch festgelegt sind, während für in zwei Eckbereiche miteinander verbindende Randbereichen angeordnete Zellen des Mobilfunksystems (A, B) mindestens ein Bit der in diesen Zellen verwendeten Codes identisch festgelegt ist.

8. Verfahren nach Anspruch 6 oder 7,
**dadurch gekennzeichnet,**
**dass** mehrere benachbarte Mobilfunksysteme (A, B) vorgesehen sind, und
**dass** in jedem Mobilfunksystem (A, B) die in den entsprechenden Zellen verwendeten Codes gemäß dem selben Schema entsprechend der geographischen Lage der jeweiligen Zelle in dem jeweiligen Mobilfunksystem (A, B) definiert sind.

9. Verfahren nach einem der Ansprüche 6 bis 8,
**dadurch gekennzeichnet,**
**dass** es sich bei den Codes um Verwürfelungscodes handelt.

10. Verfahren nach einem der Ansprüche 6 bis 9,
**dadurch gekennzeichnet,**
**dass** zumindest die Basisstationen (BS) der an einer Grenze von einem Mobilfunknetzbetreiber (A) zu einem anderen Mobilfunknetzbetreiber (B) angeordneten Zellen die Signalisierungsinformation senden, wobei die gemäß der Signalisierungsinformation für die Nachbarzellenbeobachtung zu benutzenden Codes benachbarten Zellen des selben Netzbetreibers (A) bzw. die gemäß der Signalisierungsinformation für die Nachbarzellenbeobachtung nicht zu benutzenden Codes benachbarten Zellen des anderen Netzbetreibers (B) entsprechen.

11. Verfahren nach einem der Ansprüche 6 bis 10,
**dadurch gekennzeichnet,**
**dass** die Signalisierungsinformation in Form einer Systeminformation übertragen wird.

12. Verfahren nach einem der Ansprüche 6 bis 11,
**dadurch gekennzeichnet,**
**dass** jede die Signalisierungsinformation sendende Basisstation (BS) eine Liste über die bei der Nachbarzellenbeobachtung zu benutzenden und/oder eine Liste über die bei der Nachbarzellenbeobachtung nicht zu benutzenden Codes führt.

13. Mobilfunksystem mit mindestens einer Basisstation sowie mindestens einer Mobilstation, beide aufweisend Mittel zur Durchführung des Verfahrens nach einem der Ansprüche 1 bis 12.

14. Mobilfunksystem nach Anspruch 13,
**dadurch gekennzeichnet,**
**dass** das Mobilfunksystem ein UMTS-Mobilfunksystem ist.

## Claims

1. Method for monitoring adjacent cells in a mobile radio telephone system, in which
- at least the base station (BS) currently responsible for a mobile station (MS) transmits a signalling information item which informs the mobile station (MS) of the codes to be used in the monitoring of adjacent cells,
- the mobile station (MS) located in a cell of a mobile radio telephone system receives, for the purpose of monitoring adjacent cells, transmit signals coded with different cell-specific codes from base stations (BS) of adjacent cells and decodes and evaluates them in accordance with the respective cell-specific codes,
the mobile station (MS), in monitoring adjacent cells, only decoding and evaluating the adjacent cells' transmit signals coded with a code which can be used for the monitoring of adjacent cells in accordance with the signalling information,
**characterized in that**
- the codes to be used in the monitoring of adjacent cells and/or the codes not to be used in the monitoring of adjacent cells are transmitted to the mobile station in the signalling information,
- the signalling information informs the mobile station (MS) of a particular mask and of a particular bit pattern, the mask being used for selecting certain bits from the binary representation of the individual codes of the adjacent cells, and
- the mobile station uses for the monitoring of adjacent cells only codes whose bits, selected by the mask, either correspond to the particular bit pattern or do not correspond to the particular bit pattern.

2. Method according to Claim 1, **characterized in that** the codes are scrambling codes.

3. Method according to Claim 1 or 2, **characterized in that** at least the base stations (BS) of the cells arranged at a border between one mobile radio telephone network telephone operator (A) and another mobile radio telephone network operator (B) transmit the signalling information, in which the codes, to be used in accordance with the signalling information for monitoring adjacent cells, correspond to adjacent cells of the same network operator (A) or, respectively, the codes not to be used according to the signalling information for monitoring adjacent cells correspond to adjacent cells of the other network operator (B).

4. Method according to one of Claims 1-3, **characterized in that** the signalling information is transmitted in the form of system information.

5. Method according to one of the preceding claims, **characterized in that** each base station (BS) transmitting the signalling information has a list about the codes to be used in monitoring the adjacent cells and/or a list about the codes not to be used in monitoring the adjacent cells.

6. Method for monitoring adjacent cells in a mobile radio telephone system, in which
- at least the base station (BS) currently responsible for a mobile station (MS) transmits a signalling information item which informs the mobile station (MS) of the codes to be used in the monitoring of adjacent cells,
- the mobile station (MS) located in a cell of a mobile radio telephone system receives, for the purpose of monitoring adjacent cells, transmit signals coded with different cell-specific codes from base stations (BS) of adjacent cells and decodes and evaluates them in accordance with the respective cell-specific codes, the mobile station (MS), in monitoring adjacent cells, only decoding and evaluating the adjacent cells' transmit signals coded with a code which can be used for the monitoring of adjacent cells in accordance with the signalling information,
**characterized in that**
- the codes to be used in the monitoring of adjacent cells and/or the codes not to be used in the monitoring of adjacent cells are transmitted to the mobile station in the signalling information,
- in the individual cells of the mobile radio telephone system (A, B), the codes used by the respective base station (BS) are defined in accordance with the geographic position of the respective cell in the mobile radio telephone system (A, B), and
- the signalling information informs the mobile station (MS) of the current geographic position of the mobile station (MS) within the mobile radio telephone system (A, B), the mobile station (MS) drawing conclusions about the codes used in the adjacent cells from this information about its own geographic position within the mobile radio telephone system (A, B) and using these codes for monitoring the adjacent cells.

7. Method according to Claim 6, **characterized in that,** for cells arranged within the same geographic area of the mobile radio telephone system (A, B), at least one bit of the code used in the corresponding cells is identically specified, two bits being identically specified particularly for cells located in the corner areas of the mobile radio telephone system (A, B) whereas at least one bit of the codes used in the cells is identically specified for cells of the mobile radio telephone system (A, B) arranged in edge areas with one another.

8. Method according to Claim 6 or 7, **characterized in that** a number of adjacent mobile radio telephone systems (A, B) are provided and **in that** in each mobile radio telephone system (A, B), the codes used in the corresponding cells are defined in accordance with the same arrangement in accordance with the geographic position of the respective cell in the respective mobile radio telephone system (A, B).

9. Method according to one of Claims 6 to 8, **characterized in that** the codes are scrambling codes.

10. Method according to one of Claims 6 to 9,
**characterized**
**in that** at least the base stations (BS) of the cells arranged at a border between one mobile radio telephone network operator (A) and another mobile radio telephone network operator (B) transmit the signalling information, in which the codes, to be used in accordance with the signalling information for monitoring adjacent cells, correspond to adjacent cells of the same network operator (A) or, respectively, the codes not to be used according to the signalling information for monitoring adjacent cells correspond to adjacent cells of the other network operator (B).

11. Method according to one of Claims 6 to 10,
**characterized**
**in that** the signalling information is transmitted in the form of system information.

12. Method according to one of Claims 6 to 11,
**characterized**
**in that** each base station (BS) transmitting the signalling information has a list about the codes to be used in monitoring the adjacent cells and/or a list about the codes not to be used in monitoring the adjacent cells.

13. Mobile radio telephone system having at least one base station and at least one mobile station, both having means for carrying out the method according to one of Claims 1 to 12.

14. Mobile radio telephone system according to Claim 13, **characterized in that** the mobile radio telephone system is a UMTS mobile radio telephone system.

## Revendications

1. Procédé d'observation de cellules voisines dans un système de radiocommunication mobile, dans lequel
- une information de signalisation est émise au moins par la station de base (BS) momentanément compétente pour une station mobile (MS), laquelle information de signalisation communique à la station mobile (MS) les codes à utiliser lors de l'observation de cellules voisines,
- des signaux d'émission de stations de base (BS) de cellules voisines, signaux codés avec différents codes spécifiques aux cellules, sont reçus par la station mobile (MS) se trouvant dans une cellule d'un système de radiocommunication mobile en vue de l'observation de cellules voisines, ils sont décodés suivant les codes spécifiques aux cellules respectifs et ils sont évalués, la station mobile (MS) lors de l'observation de cellules voisines ne décodant et n'évaluant que les signaux d'émission des cellules voisines qui sont codés avec un code utilisable pour l'observation de cellules voisines selon l'information de signalisation,
**caractérisé par le fait que**
- dans l'information de signalisation sont communiqués à la station mobile les codes à utiliser lors de l'observation de cellules voisines et/ou les codes à ne pas utiliser lors de l'observation de cellules voisines,
- avec l'information de signalisation est communiqué à la station mobile (MS) un certain masque ainsi qu'une certaine configuration binaire, des bits déterminés à l'aide du masque étant sélectionnés dans la représentation binaire des codes individuels des cellules voisines, et
- la station mobile utilise pour l'observation de cellules voisines seulement des codes dont des bits sélectionnés par le masque soit correspondent à la configuration binaire déterminée soit ne correspondent pas à la configuration binaire déterminée.

2. Procédé selon la revendication 1,
**caractérisé par le fait que** les codes sont des codes de brouillage.

3. Procédé selon la revendication 1 ou 2,
**caractérisé par le fait qu'**au moins les stations de base (BS) des cellules placées à une limite entre un exploitant de réseau de radiocommunication mobile (A) et un autre exploitant de réseau de radiocommunication mobile (B) émettent l'information de signalisation, les codes à utiliser selon l'information de signalisation pour l'observation de cellules voisines correspondant alors à des cellules voisines du même exploitant de réseau (A) et les codes à ne pas utiliser selon l'information de signalisation pour l'observation de cellules voisines correspondant alors à des cellules voisines de l'autre exploitant de réseau (B).

4. Procédé selon l'une des revendications 1 à 3,
**caractérisé par le fait que** l'information de signalisation est transmise sous la forme d'une information de système.

5. Procédé selon l'une des revendications précédentes,
**caractérisé par le fait que** chaque station de base (BS) émettant l'information de signalisation gère une liste avec les codes à utiliser lors de l'observation de cellules voisines et/ou une liste avec les codes à ne pas utiliser lors de l'observation de cellules voisines.

6. Procédé d'observation de cellules voisines dans un système de radiocommunication mobile, dans lequel
- une information de signalisation est émise au moins par la station de base (BS) momentanément compétente pour une station mobile (MS), laquelle information de signalisation communique à la station mobile (MS) les codes à utiliser lors de l'observation de cellules voisines,
- des signaux d'émission de stations de base (BS) de cellules voisines, signaux codés avec différents codes spécifiques aux cellules, sont reçus par la station mobile (MS) se trouvant dans une cellule d'un système de radiocommunication mobile en vue de l'observation de cellules voisines, ils sont décodés suivant les codes spécifiques aux cellules respectifs et ils sont évalués, la station mobile (MS) lors de l'observation de cellules voisines ne décodant et n'évaluant que les signaux d'émission des cellules voisines qui sont codés avec un code utilisable pour l'observation de cellules voisines selon l'information de signalisation,
**caractérisé par le fait que**
- dans l'information de signalisation sont communiqués à la station mobile les codes à utiliser lors de l'observation de cellules voisines et/ou les codes à ne pas utiliser lors de l'observation de cellules voisines,
- dans les différentes cellules du système de radiocommunication mobile (A, B), les codes utilisés par la station de base (BS) respective sont définis en fonction de la position géographique de la cellule respective dans le système de radiocommunication mobile (A, B), et
- avec l'information de signalisation est communiquée à la station mobile (MS) la position géographique momentanée de la station mobile (MS) à l'intérieur du système de radiocommunication mobile (A, B), la station mobile (MS) déduisant de cette information relative à sa propre position géographique à l'intérieur du système de radiocommunication mobile (A, B) les codes utilisés dans les cellules voisines et utilisant ensuite ces codes pour l'observation de cellules voisines.

7. Procédé selon la revendication 6,
**caractérisé par le fait que**, pour des cellules placées dans la même zone géographique du système de radiocommunication mobile (A, B), au moins un bit du code utilisé dans les cellules correspondantes est fixé à l'identique sachant que, notamment pour des cellules situées dans des zone d'angle du système de radiocommunication mobile (A, B), deux bits sont fixés à l'identique tandis que, pour des cellules du système de radiocommunication mobile (A, B) placées dans des zones marginales reliant deux zones d'angle entre elles, au moins un bit des codes utilisés dans ces cellules est fixé à l'identique.

8. Procédé selon la revendication 6 ou 7,
**caractérisé par le fait que**
- plusieurs systèmes de radiocommunication mobile (A, B) sont prévus, et
- dans chaque système de radiocommunication mobile (A, B), les codes utilisés dans les cellules correspondantes sont définis selon le même schéma en fonction de la position géographique de la cellule respective dans le système de radiocommunication mobile respectif (A, B).

9. Procédé selon l'une des revendications 6 à 8,
**caractérisé par le fait que** les codes sont des codes de brouillage.

10. Procédé selon l'une des revendications 6 à 9,
**caractérisé par le fait qu'**au moins les stations de base (BS) des cellules placées à une limite entre un exploitant de réseau de radiocommunication mobile (A) et un autre exploitant de réseau de radiocommunication mobile (B) émettent l'information de signalisation, les codes à utiliser selon l'information de signalisation pour l'observation de cellules voisines correspondant alors à des cellules voisines du même exploitant de réseau (A) et les codes à ne pas utiliser selon l'information de signalisation pour l'observation de cellules voisines correspondant alors à des cellules voisines de l'autre exploitant de réseau (B).

11. Procédé selon l'une des revendications 6 à 10,
**caractérisé par le fait que** l'information de signalisation est transmise sous la forme d'une information de système.

12. Procédé selon l'une des revendications 6 à 11,
**caractérisé par le fait que** chaque station de base (BS) émettant l'information de signalisation gère une liste avec les codes à utiliser lors de l'observation de cellules voisines et/ou une liste avec les codes à ne pas utiliser lors de l'observation de cellules voisines.

13. Système de radiocommunication mobile comprenant au moins une station de base et au moins une station mobile, toutes deux comportant des moyens pour la mise en oeuvre du procédé selon l'une des revendications 1 à 12.

14. Système de radiocommunication mobile selon la revendication 13,
**caractérisé par le fait que** le système de radiocommunication mobile est un système de radiocommunication mobile UMTS.
